# EUROPEAN PATENT APPLICATION

(11) **EP 2 568 357 A2**
(43) Date of publication of application: **13.03.2013**
(21) Application number: 11777557.7
(22) Date of filing: 03.05.2011
(51) Int. Cl.: G06F 3/033

(54) **COMPUTER MOUSE**

(30) Priority: 21.02.2011 KR 20110001498 U; 30.11.2010 KR 20100012415 U; 03.05.2010 KR 20100004661 U
(71) Applicant: Kim, Tae Hyung, Busan 611-821 (KR)
(72) Inventor: Kim, Tae Hyung, Busan 611-821 (KR)
(74) Representative: Hocking, Adrian Niall
(86) International application number: PCT/KR2011/003314
(87) International publication number: WO 2011/139076

(57) **Abstract**

A computer mouse includes a sliding member having a shape of a sliding rod to be used for a long period of time. The sliding rod is accommodated in a mouse body, and the lower end of sliding rod protrudes from the bottom of the mouse body. In addition, a screwdriver, which is used for enabling the sliding rod to protrude from the bottom of the mouse body, can be stored together with the computer mouse

## Description

### TECHNICAL FIELD

The present invention relates to a computer mouse including a sliding member.

### BACKGROUND ART

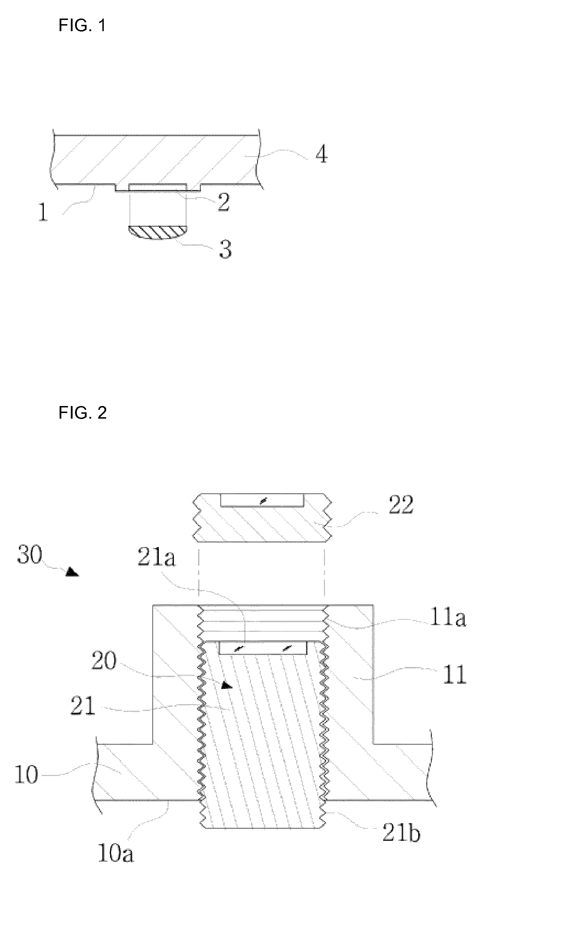

A sliding member included in a computer mouse is used to reduce friction between a bottom surface of a mouse body and a mouse pad, as disclosed in Japanese Utility Model Registration No. 03143935 (August 7, 2008) shown in FIG. 1. Referring to FIG. 1, a sliding member is a thin plate 3 is adhesively inserted by using an adhesive into a shallow groove 2 formed in a bottom surface 1 of a mouse body 4. The sliding member may be easily worn out.

### DETAILED DESCRIPTION OF THE INVENTION

### TECHNICAL PROBLEM

The present invention provides a computer mouse including a sliding member to be used for a long period time.

### TECHNICAL SOLUTION

According to an aspect of the present invention, there is provided a computer mouse including a sliding member having a shape of a sliding rod, in which the sliding rod is accommodated in a mouse body, and the lower end thereof protrudes from the bottom surface of the mouse body.

According to another aspect of the present invention, there is provided a computer mouse including a sliding rod that is accommodated in a mouse body by being screwed, In addition, a screwdriver, which is used to protrude the lower end portion of the sliding rod from a bottom surface of the mouse body, can be stored in the computer mouse.

### ADVANTAGEOUS EFFECTS

Since a computer mouse according to an embodiment of the present invention includes a sliding member having a shape of a sliding rod to be used for a long period time. When the sliding rod is worn out, the sliding rod can be replaced with a new one. Thus, no new computer mouse needs to be bought.

Also, since a computer mouse according to another embodiment of the present invention allows a screwdriver used to protrude a sliding rod from a bottom surface of a mouse body to be stored therein, the screwdriver may be conveniently used any time.

### DESCRIPTION OF THE DRAWINGS

FIG. 1 is an enlarged, partial cross-sectional view illustrating a conventional computer mouse.
FIG. 2 is an enlarged, partial cross-sectional view illustrating a computer mouse in which a sliding member is received, according to an embodiment of the present invention.
FIG. 3 is an enlarged, partial cross-sectional view illustrating a modified example of the computer mouse of FIG. 2.
FIG. 4 is an enlarged, partial cross-sectional view illustrating a bottom surface of the computer mouse of FIG. 3.
FIG. 5 is an exploded perspective view illustrating a computer mouse in which a screwdriver is received, according to another embodiment of the present invention.
FIG. 6 is a perspective view illustrating a modified example of the computer mouse of FIG. 5.

### BEST MODE

The present invention will now be described more fully with reference to the accompanying drawings, in which exemplary embodiments of the invention are shown. It will be understood by one of ordinary skill in the art that the embodiments should be considered in a descriptive sense only and not for purposes of limitation, and the spirit and scope of the one or more embodiments of the present invention is defined by the following claims.

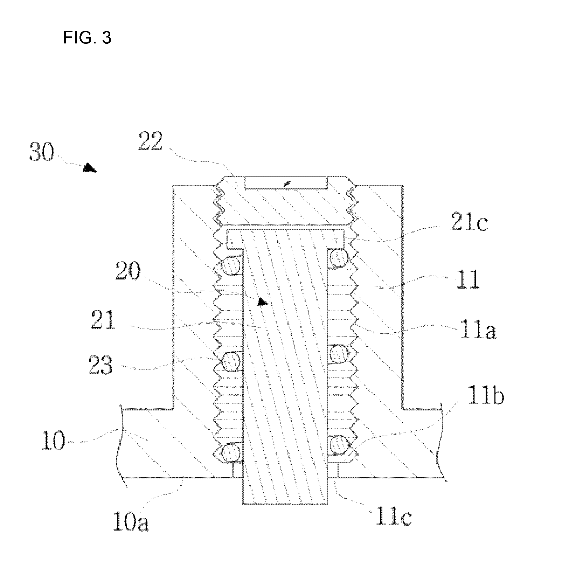

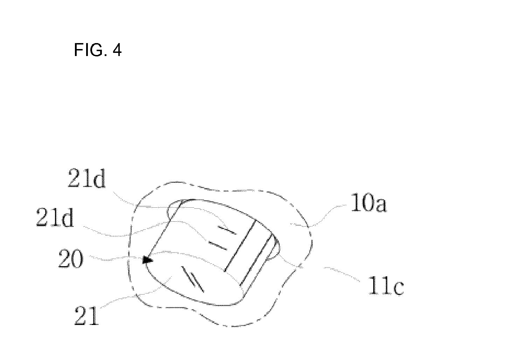

FIGS. 2 through 4 illustrate a computer mouse 30, according to an embodiment of the present invention. Referring to FIGS. 2 through 4, the computer mouse 30 includes a sliding member 20. A receiving pipe 11 is formed upward from the mouse body 10 of the computer mouse 30. The sliding member 20 having a shape of a sliding rod 21 and received in the receiving pipe 11, wherein a lower end of the sliding rod 21 protrudes from the bottom surface 10a of the mouse body 10.

The receiving pipe 11 has a first screw thread 11 a on an inner circumferential surface thereof, a screwdriver groove 21 a is cut into a top surface of the sliding rod 21, and a second screw thread 21 b is formed on an outer circumferential surface of the sliding rod 21 and is coupled with the first screw thread 11 a formed on the inner circumferential surface of the receiving pipe 11

An anti-separation set screw 22 for preventing separation of the sliding rod 21 from the receiving pipe 11 is coupled to the first screw thread 11 a formed on the inner circumferential surface of the receiving pipe 11 over the sliding rod 21.

Notches 21 d may be formed in a longitudinal direction in an outer surface of the sliding rod 21.

The first screw thread 11 a is formed on the inner circumferential surface of the receiving pipe 11, an edge portion 11b is formed on a lower portion of the first screw thread 11 a, a protruding portion 21 c protrudes upward from the sliding rod 21, a spring 23 is inserted between the protruding portion 21 c and the edge portion 11 b, the anti-separation set screw 22 for preventing separation of the sliding rod 21 is coupled to the first screw thread 11a formed on the inner circumferential surface of the receiving pipe 11 over the sliding rod 21, and a cross-sectional surface of the sliding rod 21 and a hole 11 c of the receiving pipe 11 formed in the bottom surface 10a may have oval shapes.

The cross-sectional surface of the sliding rod 21 may have an oval shape and the notches 21 d may be formed in the longitudinal direction in the outer surface of the sliding rod 21.

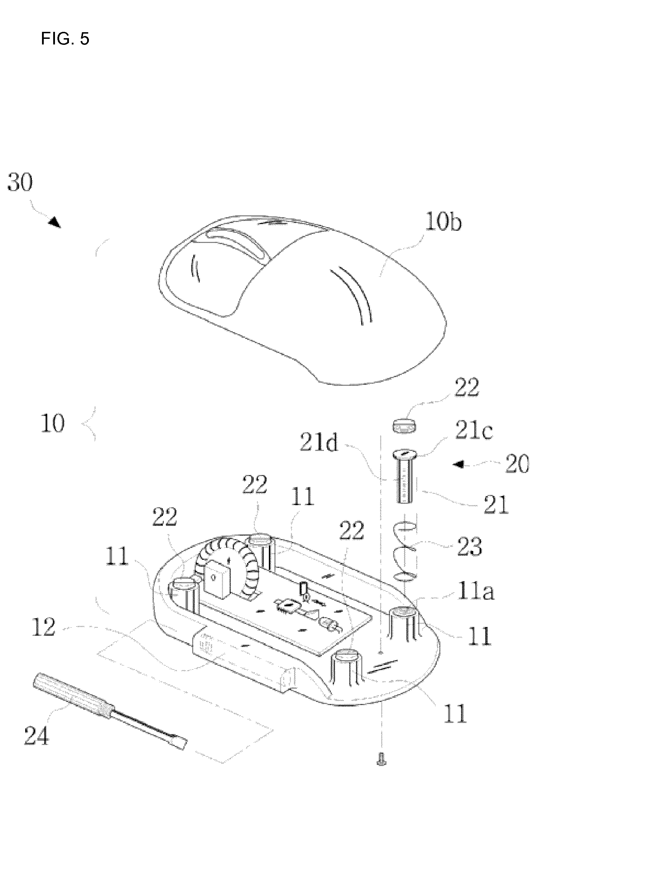

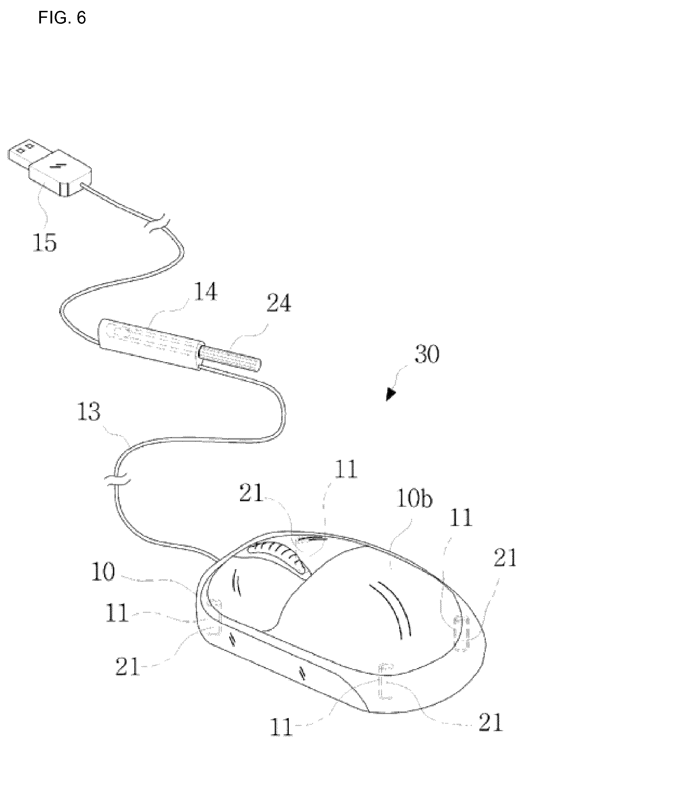

FIGS. 5 and 6 illustrate the mouse 30 according to another embodiment of the present invention. Referring to FIGS. 5 and 6, a receiving hole 12 for receiving a screwdriver 24 is formed in the mouse body 10, and the screwdriver 24 is received in the receiving hole 12. Alternatively, a receiving case 14 for receiving the screwdriver 24 is coupled to a cable 13 connected to the mouse body 10, and the screwdriver 24 may be received in the receiving case 14.

In FIGS. 5 and 6, reference numeral 10b denotes a cover and 15 denotes a universal serial bus (USB) connector.

### INDUSTRIAL APPLICABILITY

The present invention may be applied to a computer mouse including a sliding member.

## Claims

1. A computer mouse, the computer mouse comprising:
a mouse body;
a receiving pipe formed upward from a bottom surface of the mouse body; and
a sliding member having a shape of a sliding rod and received in the receiving pipe, wherein a lower end of the sliding rod protrudes from the bottom surface of the mouse body.

2. The computer mouse of claim 1, wherein the receiving pipe has a first screw thread on an inner circumferential surface thereof, a screwdriver groove is cut into a top surface of the sliding rod, and a second screw thread is formed on an outer circumferential surface of the sliding rod and is coupled with the first screw thread formed on the inner circumferential surface of the receiving pipe.

3. The computer mouse of claim 2, further comprising an anti-separation set screw for preventing separation of the sliding rod from the receiving pipe is coupled to the first screw thread formed on the inner circumferential surface of the receiving pipe over the sliding rod.

4. The computer mouse of claim 1, wherein the receiving pipe has a first screw thread on an inner circumferential surface of the receiving pipe, an edge portion is formed on a lower portion of the first screw thread, a protruding portion protrudes upward and outward from the sliding rod, a spring is inserted between the protruding portion and the edge portion, an anti-separation set screw for preventing separation of the sliding rod is coupled to the first screw thread formed on the inner circumferential surface of the receiving pipe over the sliding rod, and a hole of the receiving pipe, which is formed in the bottom surface of the mouse body, and a cross-sectional surface of the sliding rod have oval shapes.

5. The computer mouse of claim 1, wherein the sliding rod has notches formed in a longitudinal direction in an outer surface of the sliding rod, and a cross-sectional surface of the sliding rod has an oval shape.

6. The computer mouse of claim 1, wherein the mouse body has a receiving hole for receiving a screwdriver, and the screwdriver is received in the receiving hole.

7. The computer mouse of claim 1, wherein the mouse body is connected to a cable and a receiving case for receiving a screwdriver is connected to the cable.
